# EUROPÄISCHE PATENTANMELDUNG

(11) **EP 4 253 162 A1**
(43) Veröffentlichungstag der Anmeldung: **04.10.2023**
(21) Anmeldenummer: 23000039.0
(22) Anmeldetag: 09.03.2023
(51) Int. Cl.: B60R 21/02, B66F 9/075

(54) **RÜCKHALTEVORRICHTUNG FÜR EINEN FAHRER EINES FAHRZEUGS**

(30) Priorität: 15.03.2022 DE 202022000643 U
(71) Anmelder: HSM GmbH & Co. KG, 85119 Ernsgaden (DE)
(72) Erfinder: Burblies, Marc, 85088 Knodorf (DE); Schnurr, Michael, 85049 Ingolstadt (DE)
(74) Vertreter: Witzany, Manfred

(57) **Zusammenfassung**

Eine Rückhaltevorrichtung (1) dient für einen Fahrer eines Fahrzeugs. Sie weist mindestens ein Rückhalteelement (6, 7) auf, welches zwischen einer den Fahrer im Fahrzeug haltenden Rückhaltestellung und einer ein Ein- und Aussteigen ermöglichenden Freigabestellung verstellbar ist. Diesem Rückhalteelement (6, 7) ist mindestens ein Verriegelungselement (13) zugeordnet, welches zwischen einer das Rückhalteelement (6, 7) in einer Rückhaltestellung haltenden Verriegelungsstellung und einer Entriegelungsstellung verstellbar ist. Zur Verbesserung der Sicherung des Rückhalteelements (6, 7) in der Rückhaltestellung weist dieses mindestens eine um eine Drehachse (16) verdrehbare Handhabe (14) auf. Diese kann von Fingern und Daumen mindestens einer Hand des Fahrers umgriffen werden. Durch eine Drehbewegung (17) in Richtung der Finger oder in Gegenrichtung wird das mindestens eine Verriegelungselement (13) in die Entriegelungsstellung überführt. (Figur 1)

## Beschreibung

Die Erfindung betrifft eine Rückhaltevorrichtung für einen Fahrer eines Fahrzeugs, welche mindestens ein verstellbares Rückhalteelement und mindestens ein verstellbares Verriegelungselement aufweist.

Aus der EP 1 518 759 B1 ist eine gattungsgemäße Rückhaltevorrichtung bekannt. Diese weist als Rückhalteelement einerseits ein Teleskoprohr und andererseits einen Sicherheitsgurt auf. Das Teleskoprohr ist dabei um eine horizontale Achse verschwenkbar und kann auf diese Weise von einer einen Fahrer sichernden Rückhaltestellung in eine Freigabestellung verbracht werden. Um das Teleskoprohr sicher in der Rückhaltestellung zu halten, ist ein Verriegelungselement in Form eines Schlosses vorgesehen, welches mittels einer Handhabe betätigbar ist. Diese Rückhaltevorrichtung hat sich in der Praxis bewährt und bildet den Ausgangspunkt der vorliegenden Erfindung.

Der Erfindung liegt die Aufgabe zugrunde, eine Rückhaltevorrichtung der eingangs genannten Art zu schaffen, die sich durch eine verbesserte Sicherung des Rückhalteelements in der Rückhaltestellung auszeichnet.

Diese Aufgabe wird mit den folgenden Merkmalen gelöst.

Eine erfindungsgemäße Rückhaltevorrichtung dient für einen Fahrer eines Fahrzeugs, wobei insbesondere an Arbeitsfahrzeuge wie Flurförderfahrzeuge, Frontlader, Bagger und dergleichen gedacht ist. Diese Aufzählung ist jedoch lediglich beispielhaft und nicht abschließend zu verstehen. Die Rückhaltevorrichtung weist mindestens ein Rückhalteelement auf, welches zwischen einer den Fahrer im Fahrzeug haltenden Rückhaltestellung und einer ein Ein- und Aussteigen ermöglichenden Freigabestellung verstellbar ist. Dieses mindestens eine Rückhalteelement kann unterschiedlich ausgebildet sein. Insbesondere kann es ein Schutzbügel, eine Tür, ein Sicherheitsgurt oder Kombinationen hiervon sein. Diese Aufzählung ist ebenfalls nur beispielhaft und nicht abschließend zu verstehen. Die wichtigste Aufgabe des mindestens einen Rückhalteelements ist es, den Fahrer bei einem Unfall, beispielsweise beim Umkippen des Fahrzeugs, sicher im Fahrzeug zu halten, dass auf diese Weise schwerere Verletzungen vermieden werden. Hierzu ist es insbesondere wichtig, dass das mindestens eine Rückhaltelement auch sicher in der Rückhaltestellung verbleibt und sich nicht versehentlich in die Freigabestellung überführt. Zu diesem Zweck ist mindestens ein Verriegelungselement vorgesehen, welches dem mindestens einen Rückhaltelement zugeordnet ist. Dieses mindestens eine Verriegelungselement ist zwischen einer das mindestens eine Rückhalteelement in der Rückhaltestellung haltenden Verriegelungsstellung und einer dessen Überführung in die Freigabestellung ermöglichenden Entriegelungsstellung verstellbar. Es hat sich nun herausgestellt, dass gerade das mindestens eine Verriegelungselement ein erhebliches Sicherheitsproblem bildet. Zum einen muss es ergonomisch gut erreichbar sein, um das Ein- und Aussteigen in das bzw. aus dem Fahrzeug leicht zu ermöglichen. Zum anderen ist aber jegliche Fehlbetätigung des mindestens einen Verriegelungselements sicher auszuschließen. Bei jeder Art von Hebel, Druckknopf oder dergleichen besteht immer die Gefahr, dass dieser versehentlich betätigt wird, was dann zur Entriegelung des mindestens einen Rückhalteelements führen kann. Um in diesem Punkt mehr Sicherheit zu gewährleisten, weist das mindestens eine Verriegelungselement mindestens eine um eine Achse verdrehbare Handhabe auf, welche von Fingern und Daumen einer Hand des Fahrers umgreifbar ist. Zur Überführung des mindestens einen Verriegelungselements in die Entriegelungsstellung muss diese Handhabe verdreht werden, wobei die Drehbewegung in Richtung der Finger oder in Gegenrichtung erfolgt. Damit muss auf die mindestens eine Handhabe ein Drehmoment ausgeübt werden, so dass ein versehentliches Anstoßen das mindestens eine Verriegelungselement nicht in die Entriegelungsstellung bringen kann.

Für die mindestens eine Handhabe hat sich ein annähernd zylindrischer Körper bewährt, wobei die Drehachse der Zylinderachse entspricht. Durch diese Form der mindestens einen Handhabe ist ein versehentliches Einbringen eines Drehmoments zur Überführung des mindestens einen Verriegelungselements in die Entriegelungsstellung praktisch ausgeschlossen. Es muss vielmehr ein Kräftepaar auf gegenüberliegende Seiten der mindestens einen Handhabe ausgeübt werden. Dies ist in der Praxis nur durch eine bewusste Handlung und nicht versehentlich möglich.

Um einen sicheren Griff der mindestens einen Handhabe zu gewährleisten, ist es vorteilhaft, wenn die mindestens eine Handhabe daumenseitig mindestens einen radial erweiternden Kragen aufweist. Dieser mindestens eine Kragen bildet eine Art Anschlag, so dass für den Fahrer offensichtlich ist, an welcher Stelle er die mindestens eine Handhabe ergreifen soll. Hierdurch soll insbesondere gewährleistet sein, dass der Fahrer nicht Teile der Rückhaltevorrichtung ergreift, die nicht um die Drehachse verdrehbar sind, so dass eine sichere Handhabung der Rückhaltevorrichtung gewährleistet ist.

Um die Übertragung des erforderlichen Drehmoments auf die mindestens eine Handhabe zu erleichtern, ist es vorteilhaft, wenn die mindestens eine Handhabe Noppen aufweist. Auf diese Weise wird die Griffigkeit der mindestens einen Handhabe verbessert.

Alternativ oder zusätzlich ist es günstig, wenn die mindestens eine Handhabe Wülste aufweist, die zwischen den Fingern liegen. Diese Wülste verbessern das Ergreifen der mindestens einen Handhabe und damit auch die gewünschte Drehmomentübertragung.

Schließlich ist es vorteilhaft, wenn das mindestens eine Verriegelungselement federnd in die Verriegelungsstellung vorgespannt ist. Damit ergibt sich ein zusätzlicher Sicherheitsaspekt, weil ein versehentlich auf die mindestens eine Handhabe eingebrachtes Drehmoment wirkungslos ist, wenn es nur kurzzeitig wirkt. Durch die fehlende Vorbelastung wird das mindestens eine Verriegelungselement schnellstmöglich wieder in die Verriegelungsstellung gebracht.

Der Erfindungsgegenstand wird beispielhaft anhand der Zeichnung erläutert, ohne den Schutzumfang zu beschränken.

Es zeigt:
- Figur 1: eine räumliche Ansicht einer Rückhaltevorrichtung und
- Figur 2: eine Detailansicht der Rückhaltevorrichtung gemäß Figur 1.

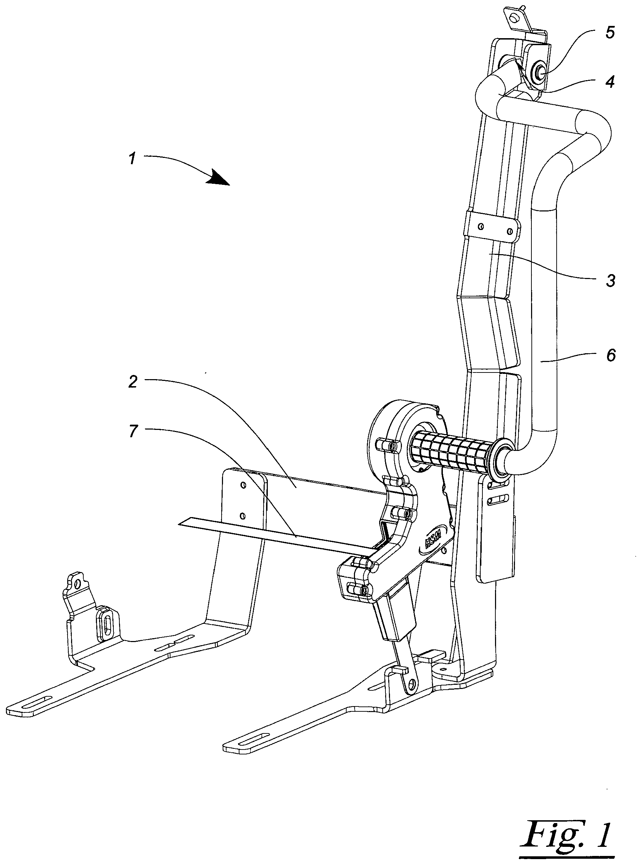

Eine Rückhaltevorrichtung 1 gemäß Figur 1 dient zum Schutz eines Fahrers eines nicht dargestellten Fahrzeugs. Die Rückhaltevorrichtung 1 weist eine Konsole 2 auf, welche zwischen einem Fahrzeugsitz und einem Fahrzeugboden gehalten wird. Diese Konsole 2 weist einen gekröpften, sich im Wesentlichen nach oben erstreckenden Arm 3 auf, an dessen oberseitigem Ende 4 ein Drehgelenk 5 vorgesehen ist. An diesem Drehgelenk 5 ist ein Rückhalteelement 6 verschwenkbar gehalten, welches zwischen einer den Fahrer im Fahrzeug sichernden Rückhaltestellung und einer ein ungehindertes Ein- bzw. Aussteigen ermöglichenden Freigabestellung verschwenkbar ist. Außerdem ist als weiteres Rückhalteelement 7 ein Sicherheitsgurt vorgesehen, der den Fahrer sicher im Fahrzeug hält.

Das Rückhalteelement 6 in Form des Schutzbügels ist mehrfach gekröpft ausgebildet, um eine optimale Anpassung an die Geometrie des Fahrzeugs zu gewährleisten. Außerdem wird hierdurch sichergestellt, dass das Rückhalteelement 6 ungehindert innerhalb des Fahrzeugs verschwenkbar ist. Als weitere Nebenbedingung für die Form des Rückhalteelements 6 ist das ungehinderte Ein- und Aussteigen in der Freigabestellung anzumerken, wodurch der Verlauf des Rückhalteelements 6 über seine Längserstreckung in recht engen Grenzen vorgegeben ist.

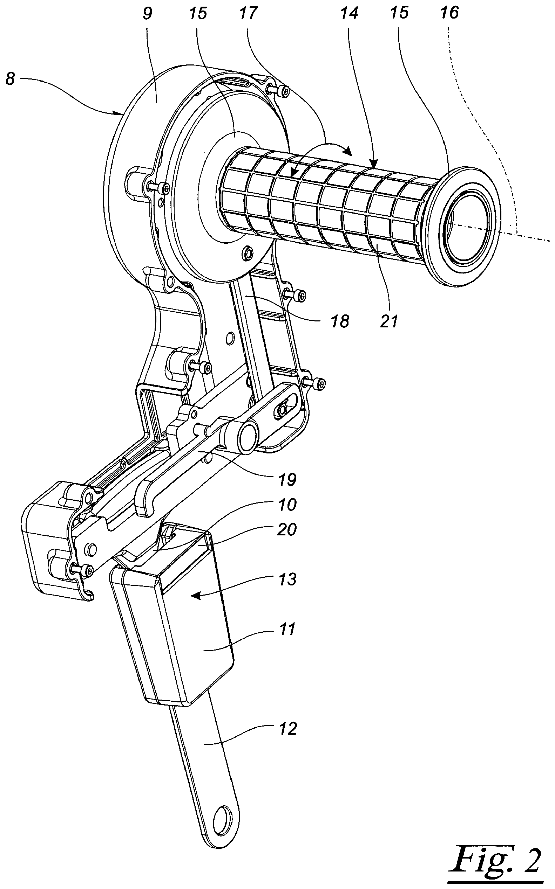

Die weiteren Details und die Funktion der Rückhaltevorrichtung 1 werden anhand der Detailzeichnung gemäß Figur 2 näher erläutert.

An einem freien Ende 8 des Rückhalteelements 6 ist eine Platte 9 angebracht, die eine Schlossfalle 10 trägt. Diese Schlossfalle 10 greift in ein Gurtschloss 11 ein, welches über einen Anker 12 fest am Fahrzeug angebracht ist. Wird das Rückhalteelement 6 in die Rückhaltestellung verschwenkt, so greift die Schlossfalle 10 in das Gurtschloss 11 ein und wird hierdurch verriegelt. Damit bilden die Schlossfalle 10 und das Schloss 11 ein Verriegelungselement 13, welches für die Funktion der Rückhaltevorrichtung 1 von entscheidender Bedeutung ist.

Um das Rückhalteelement 6, 7 entriegeln zu können, ist im Bereich des freien Endes 8 des Rückhalteelements 6 eine Handhabe 14 vorgesehen. Diese Handhabe 14 ist im Wesentlichen zylindrisch geformt und besitzt beidendig jeweils einen sich radial erstreckenden Kragen 15. Diese Kragen 15 sollen einen sicheren Griff der Handhabe 14 sicherstellen. Die Handhabe 14 ist relativ zum Rückhalteelement 6 axial verdrehbar, wobei die Drehung um eine Drehachse 16 erfolgt, die im Wesentlichen mit einer Zylinderachse der Handhabe 14 übereinstimmt. Wird die Handhabe 14 mit den Fingern und einem Daumen erfasst, so verläuft die Drehachse 16 durch die von den Fingern und dem Daumen gebildete Öffnung hindurch, wobei eine Drehbewegung 17 entlang der Finger oder in Gegenrichtung hierzu erfolgt.

Die Handhabe 14 ist mit einem auf der Platte 9 schwenkbar gelagerten Stellhebel 18 verbunden und überträgt dessen Drehbewegung in eine Schwenkbewegung. Der Stellhebel 18 kann dabei mit einem Arm 19 auf einen Entriegler 20 drücken, wodurch die Verriegelung durch das Gurtschloss 11 freigegeben und das Rückhalteelement 6 frei verschwenkbar wird.

Um eine verbesserte Griffigkeit der Handhabe 14 zu erzielen, weist diese Noppen 21 auf, welche die Drehmomentübertragung von der Hand auf die Handhabe 14 erleichtern.

### Bezugszeichenliste

- 1: Rückhaltevorrichtung
- 2: Konsole
- 3: Arm
- 4: Ende
- 5: Drehgelenk
- 6: Rückhalteelement
- 7: Rückhalteelement
- 8: freies Ende
- 9: Platte
- 10: Schlossfalle
- 11: Gurtschloss
- 12: Anker
- 13: Verriegelungselement
- 14: Handhabe
- 15: Kragen
- 16: Drehachse
- 17: Drehbewegung
- 18: Stellhebel
- 19: Arm
- 20: Entriegler
- 21: Noppe

## Patentansprüche

1. Rückhaltevorrichtung für einen Fahrer eines Fahrzeugs, wobei die Rückhaltevorrichtung (1) mindestens ein Rückhalteelement (6, 7) aufweist, welches zwischen einer den Fahrer im Fahrzeug haltenden Rückhaltestellung und einer ein Ein- und Aussteigen ermöglichenden Freigabestellung verstellbar ist, wobei dem mindestens einen Rückhalteelement (6, 7) mindestens ein Verriegelungselement (13) zugeordnet ist, welches zwischen einer das mindestens eine Rückhalteelement (6, 7) in der Rückhaltestellung haltenden Verriegelungsstellung und einer dessen Überführung in die Freigabestellung ermöglichenden Entriegelungsstellung verstellbar ist, **dadurch gekennzeichnet, dass** das mindestens eine Verriegelungselement (13) mindestens eine um eine Drehachse (16) verdrehbare Handhabe (14) aufweist, welche von Fingern und Daumen mindestens einer Hand des Fahrers umgreifbar ist, und die Drehbewegung (17) in Richtung der Finger oder in Gegenrichtung erfolgt, wobei die Drehbewegung (17) der Handhabe (14) zur Überführung des mindestens einen Verriegelungselements (13) in die Entriegelungsstellung dient.

2. Rückhaltevorrichtung nach Anspruch 1, **dadurch gekennzeichnet, dass** die mindestens eine Handhabe (14) als annähernd zylindrischer Körper ausgebildet ist.

3. Rückhaltevorrichtung nach Anspruch 1 oder 2, **dadurch gekennzeichnet, dass** die mindestens eine Handhabe (14) zumindest daumenseitig mindestens einen radial sich erweiternden Kragen (15) aufweist.

4. Rückhaltevorrichtung nach mindestens einem der Ansprüche 1 bis 3, **dadurch gekennzeichnet, dass** die mindestens eine Handhabe (14) Noppen (21) zur Verbesserung der Griffigkeit aufweist.

5. Rückhaltevorrichtung nach mindestens einem der Ansprüche 1 bis 4, **dadurch gekennzeichnet, dass** die mindestens eine Handhabe (14) Wülste aufweist, die zwischen den Fingern liegen.

6. Rückhaltevorrichtung nach mindestens einem der Ansprüche 1 bis 5, **dadurch gekennzeichnet, dass** das mindestens eine Verriegelungselement (13) federnd in die Verriegelungsstellung vorgespannt ist.
